# EUROPÄISCHE PATENTSCHRIFT

(11) **EP 1 405 136 B1**
(45) Veröffentlichungstag und Bekanntmachung des Hinweises auf die Patenterteilung: **19.12.2007**
(21) Anmeldenummer: 02748732.1
(22) Anmeldetag: 04.06.2002
(51) Int. Cl.: G02F 1/29

(54) **ABLENKEINRICHTUNG ZUR ABLENKUNG ELEKTROMAGNETISCHER WELLEN UND OPTISCHES ELEMENT HIERFÜR**
DEFLECTING DEVICE FOR DEFLECTING ELECTROMAGNETIC WAVES AND OPTICAL ELEMENT THEREFOR
DISPOSITIF DEFLECTEUR POUR DEVIER DES ONDES ELECTROMAGNETIQUES ET ELEMENT OPTIQUE CORRESPONDANT

(30) Priorität: 06.07.2001 DE 10132850
(43) Veröffentlichungstag der Anmeldung: 07.04.2004
(73) Patentinhaber: Fraunhofer-Gesellschaft zur Förderung der angewandten Forschung e.V., 80686 München (DE)
(72) Erfinder: FEISST, Arno, 79254 Oberried (DE)
(74) Vertreter: Grünecker, Kinkeldey, Stockmair & Schwanhäusser Anwaltssozietät
(86) Internationale Anmeldenummer: PCT/EP2002/006134
(87) Internationale Veröffentlichungsnummer: WO 2003/005119

(56) Entgegenhaltungen:
- EP-A- 0 863 117
- EP-A- 1 243 966
- WO-A-98/46813
- US-A- 3 544 202
- US-A- 5 526 449
- US-A- 5 802 222
- US-A1- 2001 026 659
- PATENT ABSTRACTS OF JAPAN vol. 2000, no. 20, 10. Juli 2001 (2001-07-10) -& JP 2001 075040 A (RICOH CO LTD), 23. März 2001 (2001-03-23)

## Beschreibung

Die Erfindung betrifft ein optisches Element zur Ablenkung elektromagnetischer Wellen mit zumindest einer in einem Teilbereich ausgebildeten photonischen Struktur und eine Ablenkeinrichtung für elektromagnetische Wellen mit einem solchen optischen Element.

Optische Elemente zur Ablenkung elektromagnetischer Wellen, Ablenkeinrichtungen für elektromagnetische Wellen und Verfahren zur Ablenkung elektromagnetischer Wellen finden insbesondere in Bereichen Anwendung, in denen ein Lichtstrahl, meist ein Laserstrahl, als Schreibstrahl eingesetzt wird, beispielsweise bei Druck, Belichtungs- und Bearbeitungsvorgängen oder in Druck- und Kopiereinrichtungen.

Im Stand der Technik bekannte, beispielsweise kommerziell genutzte Einrichtungen und Verfahren zu einer räumlichen Führung und insbesondere Ablenkung von Lichtstrahlen sind häufig auf mechanischen Bauelementen wie Schwingspiegel oder Polygonelementen basiert. Jedoch erreichen derartige Einrichtungen und Verfahren typischerweise lediglich Ablenkänderungsgeschwindigkeiten von einem Grad pro Mikrosekunde. Nachteilig ist weiterhin der bei diesen Einrichtungen auftretende Verschleiß und die notwendige Kühlung der bewegten mechanischen Bauelemente. Aufgrund des dementsprechend hohen apparativen Aufwandes sind solche Einrichtungen und Verfahren zudem teuer.

Nachteilig an bekannten elektrooptischen Einrichtungen und Verfahren ist, daß mit diesen nur ein eingeschränkter Winkelbereich gegenüber den bekannten mechanisch basierten Einrichtungen und Verfahren erfaßbar ist. Dementsprechend ist ein Anwendungsbereich der bekannten elektrooptischen Einrichtungen und Verfahren beschränkt.

Anwenderseitig besteht somit ein Bedarf an ohne bewegte Massen arbeitende Ablenkeinrichtungen und Verfahren, die eine erhöhte Lebensdauer aufgrund einer Vermeidung von Verschleißerscheinungen aufweisen und zudem einen Lichtstrahl schnell und über einen großen Winkelbereich führen können.

Als optische Elemente, insbesondere zur Verwendung in Ablenkeinrichtungen und Verfahren, die die beschriebenen Nachteile nicht aufweisen, können photonische Kristalle (im folgenden auch als 'PC' bezeichnet) dienen. Photonische Kristalle sind Strukturen mit periodisch variierendem Brechungsindex in einer (1D), zwei (2D) oder drei (3D) Raumrichtungen. Diese Periodizität führt zu einer Beeinflussung der Ausbreitung einer elektromagnetischen Welle, vergleichbar der Beeinflussung von Elektronenwellen in Halbleitermaterialien. Es entstehen "Bänder", in denen sich die Photonen ausbreiten können, und es treten bei entsprechender Auslegung der Struktur, insbesondere Geometrie, Periodizität und Verhältnis der optischen Dicke und Brechungsindizes der beteiligten Materialien sogenannte verbotene Zonen ("Bandlücken") auf, d.h. es entstehen Frequenzbereiche, für die eine Ausbreitung der elektromagnetischen Welle nicht möglich ist. Die "Gitterabstände" der photonischen Kristalle ("Periodenlänge" der photonischen Kristalle), müssen dabei im Bereich der Wellenlänge des verwendeten Lichtes liegen, d.h. für sichtbares Licht sind Periodenlängen im Bereich einiger Hundert Nanometer gefordert.

Gemäß den im Stand der Technik bekannten Modellen zur Beschreibung photonischer Kristalle ist die Steigung der Bänder an den Rändern der photonischen Bandlücken ("Bandkanten") und damit auch der entsprechende Brechungsindex stark nicht linear. Dies führt zu stark unterschiedlichen Brechungsindizes für verschiedene Wellenlängen des eingestrahlten Lichtes,d.h. zu einer großen Dispersion in den entsprechenden Wellenlängenbereichen.

Ein PC-Prisma, bei dem eine Auslegung der Periodenlänge derart erfolgt, daß der Wellenlängenbereich der eingestrahlten Welle dem Bereich der Bandkanten entspricht, kann gegenüber einem aus einem herkömmlichen Material hergestellten Prisma eine rund 100x größere Dispersion aufweisen, wie beispielsweise in Lin, S.Y.; Hietala, V.M.; Wang, L., et al., Highly dispersive photonic band-gap prism, Opt. Lett. 21, 1771 (1996) gezeigt.

Falls die Bänder neben der Nichtlinearität zusätzlich eine Anisotropie aufweisen, können spezielle isoenergetische Dispersionsoberflächen im Wellenvektorraum erzeugt werden, wie in Kosaka H, Kawashima T, Tomita A, Notomi M, Tamamura T, Sato T, Kawakami S, Superprism phenomena in photonic crystals: Toward microscale lightwave circuits, J LIGHTWAVE TECHNOL 17: (11) 2032-2038 Nov 1999) gezeigt. Im Vergleich zu einem konventionellen Prisma (ohne PC-Struktur) gleicher Dimension weist ein derartiges Prisma eine um bis zu 500x größere Strahlablenkung auf. Dementsprechend wird dieser Effekt als "Superprisma"-Effekt bezeichnet.

Im Stand der Technik sind eine Vielzahl an Verfahren zur Herstellung von photonischen Strukturen beschrieben. Nachteilig bei solchen Herstellverfahren ist, daß die meisten dieser Verfahren bisher nur aufwendig im Labor realisierbar sind. Zudem sind diese meist auf ein bestimmtes, durch das Verfahren selbst vorgegebene Material bzw. eine Materialklasse (beispielsweise Polymere) beschränkt. Neben den damit verbundenen Einschränkungen beim industriellen Einsatz eines solchen Verfahrens, besteht zusätzlich bisher häufig der Nachteil, daß periodische Strukturen im unteren Mikrometerbereich und darunter über größerer Bereiche nur schwer zuverlässig und reproduzierbar herzustellen sind.

Ein Ätz-Verfahren zur Herstellung von photonischen Strukturen ist für das Material Silizium beispielsweise in A. Birner et al., Phys. Stat. Sol (a) 165,111 (1998) beschrieben. Bei dem darin beschriebenen Verfahren ist nachteilig, daß ein Verhältnis von Kanaldurchmesser und Wandstärke verfahrensbedingt nur schwierig exakt einzustellen ist. Das Verhältnis kann nur annähernd und aufwendig in einem Folgeschritt erreicht werden, bei dem die Wände teilweise oxydiert werden und diese Schichten durch einen weiteren Ätzschritt abgetragen werden.
Das resultierende optische Element ist rein passiv, d.h. die Lichtwelle wird in einer durch die Struktur festgelegten Art und Weise beeinflusst und kann nicht aktiv von aussen beeinflusst, d.h. gesteuert werden. Weiterhin ist das Verfahren nicht auf beliebige andere Materialien, z.B. elektrooptische und damit steuerbare Dielektrika, anwendbar.

Es ist Aufgabe der vorliegenden Erfindung, eine Ablenkeinrichtung der eingangs genannten Art derart zu verbessern, daß eine elektromagnetische Welle schnell und über einen großen Winkelbereich geführt werden kann.

Diese Aufgabe wird bei einer Ablenkeinrichtung der eingangs genannten Art erfindungsgemäß dadurch gelöst, daß das optische Element zumindest teilweise aus einem elektrooptische und/oder magnetooptische und/oder piezoelektrische Eigenschaften aufweisenden Material ausgebildet ist, und das optische Element zumindest in einem Teilbereich eine photonische Struktur aufweist, und wobei eine äußere Kontur des optischen Elementes und/oder der photonischen Struktur als Prisma oder als Linse ausgeformt ist.

Die erfindungsgemäße Ablenkeinrichtung weist keine mechanischen Bauteile zur Bewegung des optischen Elementes zwecks Beeinflussung der Lichtwelle auf. Demzufolge treten dadurch bedingte Verschleißerscheinungen nicht auf. Eine Notwendigkeit zur Kühlung solcher mechanischen Bauteile entfällt entsprechend.

Dabei ist es vorteilhaft, wenn die photonische Struktur zumindest teilweise im elektrooptische und/oder magnetooptische und/oder piezoelektrische Eigenschaften aufweisenden Material des optischen Elementes ausgebildet ist und wenn mindestens ein Brechungsindex des optischen Elementes und/oder zumindest eine Abmessung des optischen Elementes veränderbar ist.

In einem bevorzugten Ausführungsbeispiel besteht das optische Element vollständig aus einem elektrooptische und/oder magnetooptische und/oder piezoelektrische Eigenschaften aufweisenden Material. Zudem ist die photonische Struktur vorzugsweise im gesamten Körpervolumen des optischen Elementes ausgebildet. Beispielsweise weist das optische Element LiNbO₃ und/oder BaTiO₃ und/oder LiTaO₃ als elektrooptische Herstellmaterialien auf. Aus dem Bereich magnetooptischer Materialien sei beispielhaft die Gruppe der magnetooptischen Granate (z.B. YIG = Yttrium-Eisen-Granat) genannt

Das im Rahmen eines bevorzugten Ausführungsbeispiels eingesetzte Herstellmaterial LiNbO₃ weist piezoelektrische und elektrooptische Eigenschaften auf, dementsprechend ist zumindest ein Brechungsindex und zumindest eine Abmessung des optischen Elementes veränderbar.

Nach dem bevorzugten Ausführungsbeispiel der erfindungsgemäßen Ablenkeinrichtung weist diese eine Einrichtung zur Erzeugung eines elektrischen oder magnetischen Feldes auf, wobei ein mittels der Einrichtung zur Erzeugung eines elektrischen oder magnetischen Feldes erzeugtes, elektrisches oder magnetisches Feld das optische Element zumindest teilweise und bevorzugt homogen durchsetzt. Dabei weist die Einrichtung zur Erzeugung eines elektrischen oder magnetischen Feldes vorzugsweise mehrere Elektroden, insbesondere ein Elektrodenpaar auf, das vorzugsweise einander gegenüberliegend und bevorzugt unmittelbar mit dem optischen Element in Kontakt angeordnet ist. Die Elektroden können dabei senkrecht zu einer Ausbreitungsrichtung der elektromagnetischen Welle oder in Ausbreitungsrichtung der elektromagnetischen Welle angeordnet sein. Sind die Elektroden senkrecht zur Ausbreitungsrichtung der elektromagnetischen Welle angeordnet, so sind vorzugsweise streifenförmige Aussparungen als Eintrittsflächen bzw. Austrittsflächen für die elektromagnetische Welle vorgesehen.

Gemäß dem bevorzugten Ausführungsbeispiel weist die photonische Struktur im wesentlichen periodisch angeordnete, insbesondere säulenförmige Hohlräume und/oder eine im wesentlichen periodisch angeordnete Struktur aus benachbarten säulenförmigen Bereichen auf. Die Hohlräume und/oder die säulenförmigen Bereiche sind dabei quer, insbesondere senkrecht zu der Ausbreitungsrichtung der elektromagnetischen Welle angeordnet. Zudem sind die Hohlräume vorzugsweise als Kanäle ausgebildet, wobei die Kanäle im wesentlichen parallel zueinander angeordnet sind. Gemäß diesem Ausführungsbeispiel sind die Hohlräume mit Luft erfüllt. Dementsprechend weist die photonische Struktur beispielsweise eine Materialkombination LiNbO₃/Luft auf. Die Hohlräume sind in weiteren Ausführungsbeispielen mit weiteren bzw. anderen, in fester oder flüssiger oder gasförmiger Phase oder in einem überlagerten Aggregatzustand der festen, flüssigen oder gasförmigen Phase vorliegenden Medien ausgefüllt.

Dabei weist die photonische Struktur einen sich entlang der Ausbreitungsrichtung der elektromagnetischen Welle periodisch verändernden Brechungsindex auf. Vorzugsweise ist der Brechungsindex der photonischen Struktur für die eingesetzte Lichtwellenlänge nicht linear. Weiterhin ist es vorteilhaft, wenn die photonische Struktur einen anisotropen Brechungsindex aufweist, wobei eine Mehrzahl an isoenergetischen Dispersionsoberflächen in der photonischen Struktur ausgebildet sind.

Weitere bevorzugte Ausführungsbeispiele der erfindungsgemäßen Ablenkeinrichtung für elektromagnetische Wellen mit einem optischen Element sind in den weiteren Unteransprüchen dargelegt.

Anwendungen des erfindungsgemäßen optischen Elementes ergeben sich beispielsweise in Druck-, Belichtungs- oder Bearbeitungsvorgängen, also bei Vorgängen mit einer elektromagnetischen Welle als Schreibstrahl. Ebenso ist das erfindungsgemäße optische Element als steuerbare optische Linse oder als steuerbarer optischer Schalter, beispielsweise für die optische Telekommunikation als Ein/Aus-Schalter verwendbar. Zudem ist das optische Element in wellenlängensteuerbaren Lasern und bei abstimmbaren Resonatoren für Laseranwendungen einsetzbar.

Weitere bevorzugte Ausführungsbeispiele des erfindungsgemäßen optischen Elementes zur Ablenkung elektromagnetischer Wellen mit einer zumindest in einem Teilbereich ausgebildeten photonischen Struktur sind in den weiteren Unteransprüchen dargelegt.

Die Erfindung wird nachstehend anhand von Ausführungsbeispielen und den zugehörigen Zeichnungen näher erläutert. In diesen zeigen:
- Fig. 1: schematische Schnittdarstellung eines Ausführungsbeispieles der Ablenkeinrichtung für elektromagnetische Wellen mit einem Ausführungsbeispiel des optischen Elementes,
- Fig. 2: schematische, räumliche Darstellung der Ablenkeinrichtung für elektromagnetische Wellen nach Fig. 1 mit einem weiteren Ausführungsbeispiel des optischen Elementes,
- Fig. 3: schematische, räumliche Darstellung der Ablenkeinrichtung nach Fig. 1 und 2 mit einem zusätzlichen, weiteren Ausführungsbeispiel des optischen Elementes,
- Fig. 4: schematische, räumliche Darstellung eines weiteren Ausführungsbeispieles der Ablenkeinrichtung für elektromagnetische Wellen mit einem optischen Element nach dem Ausführungsbeispiel gemäß Fig. 3, und
- Fig. 5: eine schematische, räumliche Darstellung einer photonischen Struktur eines optischen Elementes nach Erzeugung einer periodischen ferroelektrischen Domänenstruktur und vor dem selektiven Ätzen.

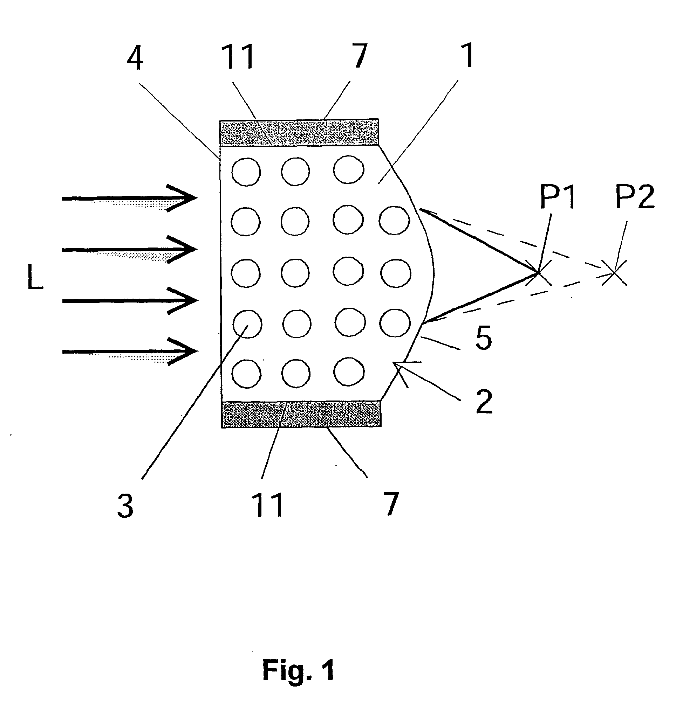

Fig. 1 zeigt eine schematische Schnittdarstellung eines Ausführungsbeispieles der Ablenkeinrichtung mit einem Ausführungsbeispiel des optischen Elementes 1.

Das optische Element 1 weist demnach eine erste, im wesentlichen ebene Eintrittsfläche 4 für elektromagnetische Wellen L und eine zweite im wesentlichen konvex geformte Austrittsfläche 5 für die elektromagnetische Welle L auf. Neben dieser Ausführung sind auch andere Linsenformen möglich (bikonvex, bikonkav, konvex-konkav, plan-konkav etc.) Das optische Element 1 weist weiterhin eine photonische Struktur 2 auf, welche in diesem bevorzugten Ausführungsbeispiel im kompletten Körpervolumen des optischen Elementes 1 ausgebildet ist. Zudem ist nach diesem bevorzugten Ausführungsbeispiel das optische Element 1 vollständig aus einem elektrooptische und piezoelektrische Eigenschaften aufweisenden Material wie LiNbO₃ gebildet. Das im Rahmen dieses bevorzugten Ausführungsbeispiels genannte Herstellmaterial LiNbO₃ weist piezoelektrische und elektrooptische Eigenschaften auf, dementsprechend ist zumindest ein Brechungsindex und zumindest eine Abmessung des optischen Elementes veränderbar.

Die im optischen Element 1 ausgebildete photonische Struktur 2 weist periodisch angeordnete Hohlräume 3 in diesem bevorzugten Ausführungsbeispiel säulenförmige Kanäle mit kreisförmiger Querschnittsfläche auf, ohne auf dieses bevorzugte Ausführungsbeispiel festgelegt zu sein. So ist beispielsweise eine Änderung der Geometrie der Querschnittsfläche oder des Verhältnisses zwischen Querschnittsfläche und Länge der Kanäle 3 ohne wesentliche Veränderungen des optischen Elementes, des Ablenkverfahrens, der Ablenkeinrichtung oder des Herstellverfahrens möglich.

Diese Kanäle 3 sind mit Luft gefüllt, dementsprechend besteht die photonische Struktur aus der Materialkombination LiNbO₃/Luft, wiederum ohne auf dieses bevorzugte Ausführungsbeispiel festgelegt zu sein. In einem weiteren Ausführungsbeispiel sind diese Kanäle 3 mit einem weiteren. Material gefüllt, welches in fester, flüssiger oder gasförmiger Phase oder in einem überlagerten Aggregatszustand der festen, flüssigen oder gasförmigen Phase vorliegen kann.

Weiterhin kann die photonische Struktur invers ausgebildet werden, d.h. die photonische Struktur wird mit periodisch angeordneten, einander benachbarten säulenförmigen Bereichen gebildet.

Die Parameter der photonischen Struktur, insbesondere ein Durchmesser der Hohlräume 3 und eine Wandstärke zwischen den Hohlräumen 3 bzw. ein Durchmesser und ein Abstand der säulenartigen Strukturen bei inverser Ausbildung der photonischen Struktur, sind so ausgelegt, daß diese für die einfallende vorzugsweise monochromatische Lichtquelle dem Bereich der Bandkanten, d.h. den Bereich großer nicht linearer Dispersion, entspricht. Dementsprechend wird der oben genannten "Superprisma"-Effekt erzeugt. Dabei ist eine Ausbreitungsrichtung der elektromagnetischen Welle L quer, insbesondere senkrecht zu einer Längsachse der Kanäle 3 bzw. der säulenartigen Bereiche angeordnet.

Das optische Element 1 weist in diesem bevorzugten Ausführungsbeispiel zwei parallel zu einer Ausbreitungsrichtung der elektromagnetischen Welle L angeordnete ebene Seitenflächen 11 auf, welche zudem zueinander parallel ausgerichtet sind. Bevorzugt sind diese ebenen, parallelen Seitenflächen 11 jeweils mit einer Elektrode 7 der Ablenkeinrichtung in Kontakt. Dieses Elektrodenpaar 7 ist in diesem Ausführungsbeispiel direkt am optischen Element 1 zum Anlegen einer Modulationsspannung U angebracht, wobei die Elektroden 7 parallel zu einer Durchstrahlrichtung der elektromagnetischen Welle L durch das optische Element 1 angeordnet sind. Eine Elektrodenform und eine Elektrodengröße ist vorzugsweise so gewählt, daß das elektrische Feld das optische Element 1 homogen durchsetzt.

Das optische Element bzw. die Ablenkeinrichtung bzw. das Ablenkverfahren sind jedoch nicht auf diese konkrete Ausführung des bevorzugten Ausführungsbeispieles beschränkt. So ist die parallele Anordnung der Seitenflächen 11 zueinander und relativ zur Ausbreitungsrichtung der elektromagnetischen Welle oder der direkte Kontakt der Elektroden 7 zu den Seitenflächen 11 oder die Ausbildung des elektrischen Feldes lediglich bevorzugt, jedoch nicht zwingend und können ohne wesentliche Veränderungen modifiziert werden.

In diesem bevorzugten Ausführungsbeispiel mit dem elektrooptische und piezoelektrische Eigenschaften aufweisenden Material LiNbO₃ wird durch Anlegen eines elektrischen Feldes eine Geometrie bzw. ein Brechungsindex des optischen Elementes 1 verändert und dementsprechend eine Beeinflussung einer die Struktur durchlaufenden elektromagnetischen Welle erzielt. Wie in Fig. 1 gezeigt, ist das optische Element als eine Sammellinse ausgebildet. Mittels des elektrischen Feldes wird dementsprechend eine Lage eines Brennpunktes der austretenden elektromagnetischen Welle beeinflußt. In

Fig. 1 ist diese Beeinflussung durch eine Verschiebung des Brennpunktes P1 zum Brennpunkt P2 dargestellt.

In einem weiteren Ausführungsbeispiel des optischen Elementes 1 ist dasselbe aus einem magnetooptischen Material gefertigt, wobei die Beeinflussung der elektromagnetischen Welle dementsprechend durch ein Anlegen und eine Modulation eines magnetischen Feldes erfolgt.

Die photonische Struktur 2 des optischen Elementes 1 wird durch Erzeugung einer periodischen ferroelektrischen Domänenstruktur mit nachfolgendem selektiven Ätzen in dem elektrooptischen und/oder magnetooptischen und/oder piezoelektrischen Material ausgebildet. Dieses Verfahren zur Herstellung photonischer Strukturen wird nachfolgend für ein bestimmtes Material, in diesem Falle LiNbO₃ durch insbesondere naßchemisches Ätzen mit HF/HNO₃ exemplarisch beschrieben. So können beispielsweise andere Materialien wie BaTiO₃ und LiTaO₃ oder andere Ätzmittel oder andere Ätzverfahren (beispielsweise plasmachemisches Ätzen) eingesetzt werden, ohne daß wesentliche Änderungen des Verfahrens zur Herstellung photonischer Strukturen notwendig sind.

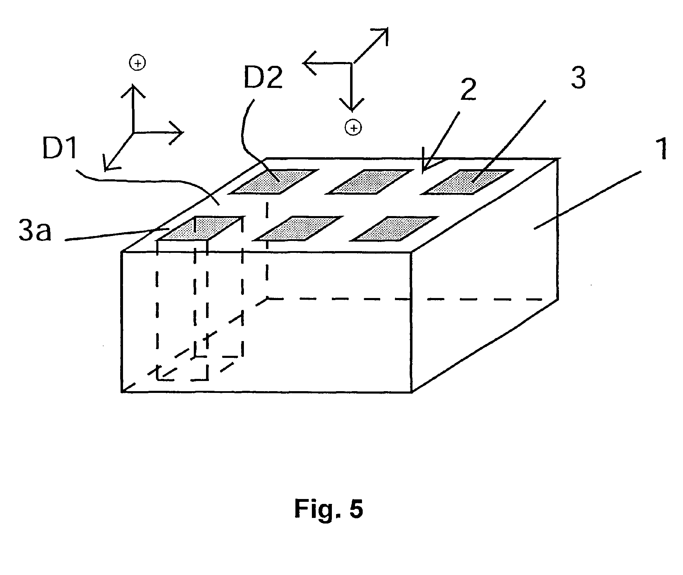

In diesem Verfahren (siehe Fig. 5) erfolgt eine Vorstrukturierung des in diesem Falle eindomänigen, elektrooptischen und piezoelektrischen Ausgangsmaterials, indem mittels eines lokal angelegten elektrischen Feldes entsprechend invertierte Domänenbereiche erzeugt werden, wobei eine Definition der Geometrie, insbesondere eines Durchmessers und einer Querschnittsform der Kanäle 3 über die Domänenwände 3a zwischen der ursprünglichen Domänenpolarisation D1 und der invertieren Domänenpolarisation D2 definiert ist. Domänenbereiche mit invertierter Polarisation D2 werden in dem insbesondere naßchemischen oder plasmachemischen Ätzvorgang bevorzugt geätzt, während das Material mit der ursprünglichen Polarisation D1 (umgekehrte Polarisation) nicht geätzt wird. In Fig. 5 sind die unterschiedlich polarisierten Domänenbereiche D1, D2 durch die oberhalb des prismatisch ausgebildeten optischen Elementes 1 schematisch angedeuteten Koordinatensysteme dargestellt, die unterschiedliche Polarisation ist durch die Richtungen der zur Oberfläche des optischen Elementes 1 senkrecht angeordneten Achsen (c-Achse) gezeigt.

Die Domänenwände 3a wirken dabei als Ätzstopp, wodurch eine exakte Definition der Geometrie und der Periode der photonischen Struktur 2 im unteren Mikrometerbereich ermöglicht wird. Da die Ätzung nur in einer Richtung, also in die Tiefe entlang der c-Achse, erfolgt, sind frei wählbare Aspektverhältnisse, also Verhältnisse zwischen Tiefe zu Breite bzw. Durchmesser der Kanäle realisierbar.

In einem weiteren Verfahren zur Herstellung photonischer Strukturen wird ein lokales, magnetisches Feld zur Vorstrukturierung verwandt. Die weiteren Prozeßschritte entsprechen sinngemäß den vorgenannten.

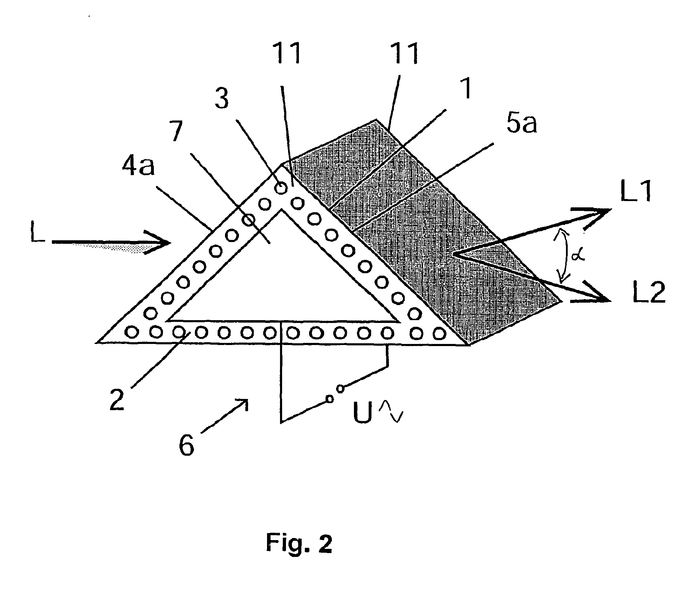

In Fig. 2 ist ein weiteres Ausführungsbeispiel des optischen Elementes 1 als Element der im Rahmen der Beschreibung von Fig. 1 erläuterten Ablenkeinrichtung dargestellt. Aufgrund des "Superprisma"-Effektes, kann durch geringfügige Änderungen des effektiven Brechungsindex ein Ablenkwinkel α entsprechend deutlich verändert werden. Auf diese Weise ist also über eine Änderung des Brechungsindex eine (Winkel-) Führung der elektromagnetischen Welle möglich. In Fig. 2 ist eine solche Änderung des Brechungsindex und die daraus resultierende Änderung des Ablenkwinkels α durch zwei mögliche Austrittsrichtungen L1 und L2 der austretenden elektromagnetischen Welle relativ zur eintretenden elektromagnetischen Welle L angedeutet.

Das optische Element 1 ist in diesem Ausführungsbeispiel als prismatischer Körper mit dreieckförmigem Querschnitt und drei im wesentlichen ebenen Seitenfläche ausgebildet. Die Eintrittsfläche 4a der elektromagnetischen Welle L und die Austrittsfläche 5a der elektromagnetischen Welle unter den Richtungen L1 oder L2 sind von zwei der drei ebenen Seitenflächen gebildet. Die dreickeckförmigen Grund- und Kopfflächen 11 sind parallel zur Ausbreitungsrichtung der elektromagnetischen Welle L angeordnet. An diesen Grund- und Kopfflächen 11 ist jeweils eine Elektrode 7 angebracht.

Die photonische Struktur 2 mit den Kanälen 3 ist entsprechend zum im Rahmen von Fig. 1 beschriebenen Ausführungsbeispiel im gesamten Körpervolumen des optischen Elementes 1 ausgebildet.

Mittels des Elektrodenpaares 7 wird vorzugsweise eine Wechselspannung U an das optische Element 1 angelegt. Das Elektroden 7 sind vergleichbar einem Kondensator ausgebildet und zudem vergleichbar einem Kondensator mit zwei Platten angeordnet. Dementsprechend wird zwischen den Elektroden 7 ein weitgehend homogenes elektrisches Feld erzeugt. Eine Kontur der Elektroden 7 ist dabei vorzugsweise an die Kontur der benachbarten Seitenfläche 11 angepaßt.

Dieses das optische Element 1 weitgehend homogen und bevorzugt vollständig durchsetzende elektrische Feld beeinflußt den Brechungsindex des in diesem Ausführungsbeispiel elektrooptische Eigenschaften aufweisenden Materials des optischen Elementes 1. Diese Beeinflussung ist durch die zwei an der Austrittsfläche 5a unter einem relativen Winkel α angeordneten Pfeile L1 und L2 verdeutlicht.

Eine analoge Strahlführung ist auch über eine Änderung der Abmaße der Struktur des optischen Elementes 1 möglich. Eine derartige Änderung kann z.B. in piezoelektrischen Materialien wiederum durch Veränderung eines angelegten elektrischen Feldes erfolgen.

Eine analoge Strahlführung ist zudem in magnetooptischen Materialien möglich, wobei ein von außen angelegtes magnetisches Feld als Parameter zur Steuerung des Brechungsindex dient.

Wie im Rahmen der vorstehend beschriebenen Ausführungsbeispiele des optischen Elementes 1 und der Ablenkeinrichtung beschrieben, kann eine äußere Form der photonischen Struktur 2 einer äußeren Form des optischen Elementes 1 entsprechen, d.h. die photonische Struktur 2 ist im kompletten Körpervolumen des optischen Elementes 1 ausgebildet. Die beschriebene Ausgestaltung des optischen Elementes 1 beispielsweise als Linse (s. Fig. 1) oder als Prisma (s. Fig. 2) und die Ausbildung der photonischen Struktur 2 im kompletten Körpervolumen des optischen Elementes 1 ist jedoch nur als ein bevorzugtes Ausführungsbeispiel zu verstehen. So kann in anderen Ausführungsbeispielen der Körper des optischen Elementes 1 eine beliebige Form, insbesondere plättchenförmig, annehmen. Die photonische Struktur 2 innerhalb des optischen Elementes 1 kann nur in einem Teilbereich des optischen Elementes 1 ausgebildet sein und eine beliebige vorbestimmte Form innerhalb des optischen Elementes annehmen.

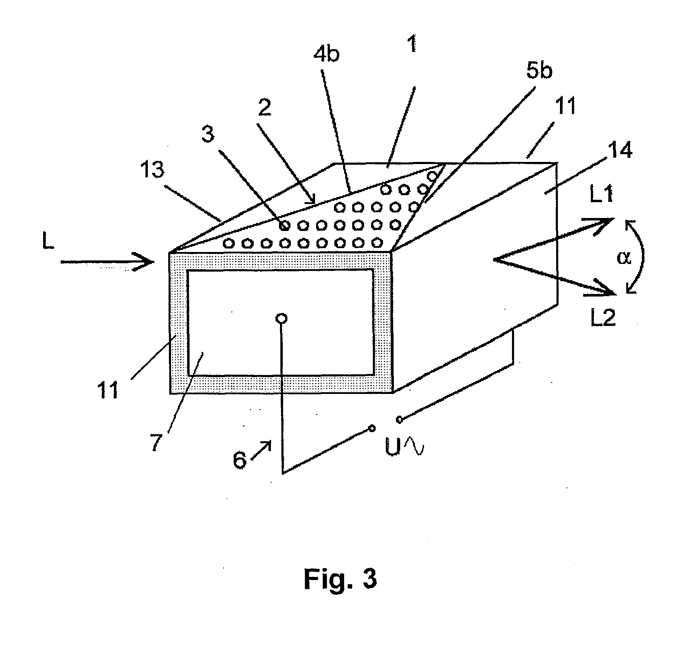

In Fig. 3 ist ein Ausführungsbeispiel für ein solches optisches Element 1 angegeben. In diesem weist das optische Element 1 eine quaderförmige (plättchenförmige) Außenkontur auf. Eine Kantenlänge der quaderförmigen Außenkontur beträgt vorzugsweise wenige mm, und eine Dicke beträgt vorzugsweise 0,4 bis 0,5 mm (Standard-Waferdicke). Die photonische Struktur 2 weist die aus Fig. 2 bekannte prismatische Struktur mit dreieckförmiger Querschnittsfläche auf.

In dem in Fig.3 gezeigten Ausführungsbeispiel tritt die elektromagnetische Welle L über eine Seitenfläche 13 des quaderförmigen Grundkörpers des optischen Elementes 1 in das optische Element 1 ein. Die elektromagnetische Welle L durchläuft das optische Element 1 vorzugsweise unbeeinflußt bis zum Beginn des Bereiches, in dem die photonische Struktur 2 ausgebildet ist. Der Bereich des optischen Elementes 1 zwischen der Eintrittsfläche 13 des optischen Elementes 1 und der Eintrittsfläche 4b der photonischen Struktur 2 ist vorzugsweise aus einem Material geformt, das im Wellenlängenbereich der elektromagnetischen Welle L nicht absorbiert.

Im Bereich der photonischen Struktur 2 wird die das optische Element 1 durchlaufende elektromagnetische Welle L entsprechend den schon beschriebenen Effekten in ihrer Ausbreitungsrichtung beeinflußt.

Nach Austritt aus der photonischen Struktur über die Austrittsfläche 5b durchläuft die elektromagnetische Welle L mit einer veränderten Ausbreitungsrichtung einen weiteren Bereich des optischen Elementes 1. Dieser weitere Bereich ist wiederum vorzugsweise aus einem Material geformt, das im Wellenlängenbereich der elektromagnetischen Welle nicht absortiert.

Die elektromagnetische Welle L tritt aus dem optischen Element 1 unter der veränderten Ausbreitungsrichtung aus. Dieser Austrittsvorgang unter der veränderten Ausbreitungsrichtung ist schematisch durch die Richtungspfeile L1 und L2 an der Austrittsfläche 14 des optischen Elementes 1 angedeutet.

An zwei, parallel zur ursprünglichen Ausbreitungsrichtung der elektromagnetischen Welle L angeordneten Seitenflächen 11 sind wiederum jeweils eine Elektrode 7 der Ablenkeinrichtung angebracht. Die Grundflächen sind in diesem Ausführungsbeispiel rechteckig, d.h. an die Geometrie der entsprechenden Seitenflächen angepaßt, ohne auf diese konkrete Ausgestaltung beschränkt zu sein. Die Ablenkeinrichtung ist zudem nicht auf einen direkten Kontakt zwischen den Elektroden 7 und den jeweiligen Seitenflächen 11 des optischen Elementes 1 festgelegt. Die Elektroden 7 können ohne wesentliche Änderungen der Ablenkeinrichtung auch zu den Seitenflächen 11 beabstandet sein.

Weist das Material, in das die photonische Struktur 2 eingeformt ist, elektrooptische Eigenschaften aus, erfolgt die Ablenkung der elektromagnetischen Welle L dementsprechend über eine Änderung des Brechungsindexes mittels einer Änderung des angelegten elektrischen Feldes. Eine analoge Strahlführung ist wiederum auch in magnetooptischen Materialien möglich, wobei ein von außen angelegtes magnetisches Feld als Parameter zur Steuerung des Brechungsindexes dient.

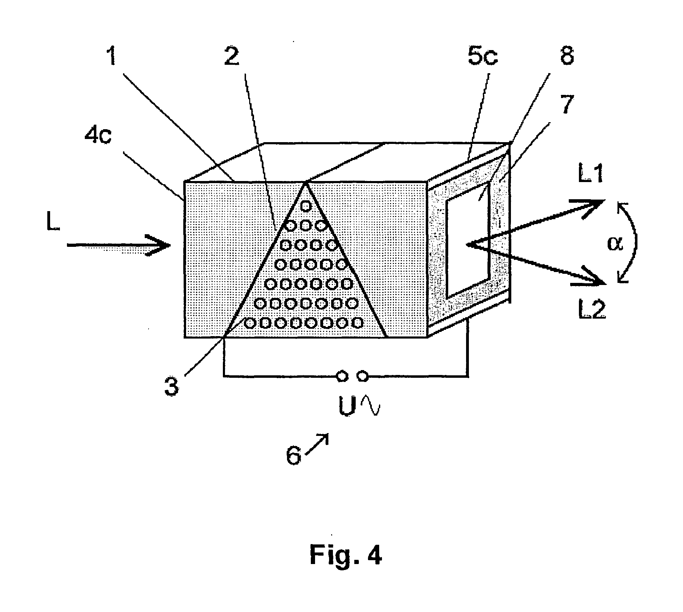

In dem in Fig. 4 gezeigten Ausführungsbeispiel der Ablenkeinrichtung sind die Elektroden benachbart zu der Eintrittsfläche 4c und der Austrittsfläche 5c der elektromagnetischen Welle L angeordnet. In diesem Fall weisen die Elektroden 7 eine vorzugsweise streifenförmige Aussparung 8 auf, wobei die streifenförmigen Aussparungen 8 in der Ausbreitungsebene der elektromagnetischen Welle und in der Ablenkebene der elektromagnetischen Welle liegen, so daß Strahleintritt und Strahlaustritt bzw. Strahlablenkung nicht behindert sind. Die weiteren Merkmale dieses Ausführungsbeispieles entsprechen dem in Fig. 3 beschriebenen Ausführungsbeispiel, eine detaillierte Beschreibung ist dort dargelegt.

Den beschriebenen Ausführungsbeispielen ist gemeinsam, daß eine Ausbreitungsrichtung einer elektromagnetischen Welle L, also eine Modulation eines Ablenkwinkels der elektromagnetischen Welle L, mittels eines ein optisches Element 1 durchsetzendes, elektrisches oder magnetischen Feldes erfolgt. Weist das optische Element 1 elektrooptische Eigenschaften auf, so wird ein Brechungsindex und damit ein Ablenkwinkel verändert. Weist das optische Element piezoelektrische Eigenschaften auf, so wird ein Ablenkwinkel über eine Geometrieveränderung des optischen Elementes ermöglicht, wodurch beispielsweise ein Brennpunkt einer Linse verschoben wird. Weist das optische Element 1 magnetooptische Eigenschaften auf, wird wiederum ein Brechungsindex beeinflußt.

## Patentansprüche

1. Optisches Element zur Ablenkung elektromagnetische Wellen mit einer zumindest in einem Teilbereich ausgebildeten photonischen Struktur, wobei das optische Element (1) zumindest teilweise ein elektrooptisches und/oder magnetooptisches und/oder piezoelektrisches Material aufweist und eine Außenkontur des optischen Elementes (1) und/oder eine Außenkontur der photonischen Struktur (2) als optische Linse oder als Prisma ausgebildet ist.

2. Optisches Element nach Anspruch 1, **dadurch gekennzeichnet, daß** das optische Element (1) vollständig aus einem elektrooptische und/oder magnetooptische und/oder piezoelektrische Eigenschaften aufweisenden Material besteht.

3. Optisches Element nach Anspruch 1 oder 2, **dadurch gekennzeichnet, daß** die photonische Struktur (2) zumindest teilweise im elektrooptische und/oder magnetooptische und/oder piezoelektrische Eigenschaften aufweisenden Material des optischen Elementes (1) ausgebildet ist

4. Optisches Element nach zumindest einem der Ansprüche 1 bis 3, **dadurch gekennzeichnet, daß** die photonische Struktur (2) im kompletten Körpervolumen des optischen Elementes (1) ausgebildet ist.

5. Optisches Element nach zumindest einem der Ansprüche 1 bis 4, **dadurch gekennzeichnet, daß** das optische Element (1) aus LiNbO₃ und/oder BaTiO₃ und/oder LiTaO₃ oder aus einem Mitglied der Granatfamilie besteht.

6. Optisches Element nach zumindest einem der Ansprüche 1 bis 5, **dadurch gekennzeichnet, daß** zumindest ein Brechungsindex des optischen Elementes (1) und/oder zumindest eine Abmessung des optischen Elementes (1) veränderbar ist.

7. Ablenkeinrichtung für elektromagnetische Wellen mit einem optischen Element nach zumindest einem der Ansprüche 1 bis 6.

8. Ablenkeinrichtung für elektromagnetische Wellen nach Anspruch 7, **gekennzeichnet durch** eine Einrichtung zur Erzeugung eines elektrischen oder magnetischen Feldes (6), wobei ein mittels der Einrichtung zur Erzeugung eines elektrischen oder magnetischen Feldes (6) erzeugtes, elektrisches oder magnetisches Feld das optische Element (1) zumindest teilweise und bevorzugt homogen durchsetzt.

9. Ablenkeinrichtung für elektromagnetische Wellen nach Anspruch 8, **dadurch gekennzeichnet, daß** die Einrichtung zur Erzeugung eines elektrischen oder magnetischen Feldes (6) mehrere, insbesondere zwei Elektroden (7) aufweist.

10. Ablenkeinrichtung für elektromagnetische Wellen nach Anspruch 9, **dadurch gekennzeichnet, daß** die Elektroden (7) unmittelbar mit dem optischen Element (1) in Kontakt sind.

11. Ablenkeinrichtung für elektromagnetische Wellen nach Anspruch 9 oder 10, **dadurch gekennzeichnet, daß** die Elektroden (7) parallel zueinander und senkrecht zu oder in Ausbreitungsrichtung der elektromagnetischen Welle (L) angeordnet sind.

12. Ablenkeinrichtung für elektromagnetische Wellen nach zumindest einem der Ansprüche 9 bis 11, **dadurch gekennzeichnet, daß** die senkrecht zu der Ausbreitungsrichtung der elektromagnetischen Welle (L) angeordneten Elektroden (7) als Eintrittsflächen oder Austrittsflächen für die elektromagnetische Welle (L) dienende und insbesondere streifenförmige Aussparungen (8) aufweisen.

13. Ablenkeinrichtung für elektromagnetische Wellen nach zumindest einem der Ansprüche 7 bis 12, **dadurch gekennzeichnet, daß** die photonische Struktur (2) einen sich entlang der Ausbreitungsrichtung der elektromagnetischen Welle (L) periodisch verändernden Brechungsindex aufweist.

14. Ablenkeinrichtung für elektromagnetische Wellen nach zumindest einem der Ansprüche 7 bis 13, **gekennzeichnet durch** einen nichtlinearen Brechungsindex der photonischen Struktur (2), wobei der nichtlineare Brechungsindex der photonischen Struktur (2) der Wellenlänge der elektromagnetischen Welle (L) angepasst ist.

15. Ablenkeinrichtung für elektromagnetische Wellen nach zumindest einem der Ansprüche 7 bis 14, **gekennzeichnet durch** einen anisotropen Brechungsindex der photonischen Struktur (2), wobei eine Mehrzahl an isoenergetische Dispersionsoberflächen in der photonischen Struktur (2) ausgebildet sind.

16. Ablenkeinrichtung für elektromagnetische Wellen nach zumindest einem der Ansprüche 7 bis 15, **dadurch gekennzeichnet, daß** die photonische Struktur (2) im wesentlichen periodisch angeordnete Hohlräume (3) und/oder eine im wesentlichen periodisch angeordnete Struktur mit einander benachbarten säulenförmigen Bereichen aufweist.

17. Ablenkeinrichtung für elektromagnetische Wellen nach Anspruch 16, **dadurch gekennzeichnet, daß** die Hohlräume (3) und/oder die säulenförmigen Bereiche quer, insbesondere senkrecht zu der Ausbreitungsrichtung der elektromagnetischen Welle (L) angeordnet sind.

18. Ablenkeinrichtung für elektromagnetische Wellen nach Anspruch 16 oder 17, **dadurch gekennzeichnet, daß** die Hohlräume (3) als Kanäle ausgebildet sind, wobei die Kanäle im wesentlichen parallel zueinander angeordnet sind.

19. Ablenkeinrichtung für elektromagnetische Wellen nach zumindest einem der Ansprüche 16 bis 18, **dadurch gekennzeichnet, daß** die Hohlräume (3) mit einem weiteren, in einer festen oder einer flüssigen oder einer gasförmigen Phase oder in einem Überlagerten Aggregatszustand der festen, flüssigen oder gasförmigen Phase vorliegenden Medium erfüllt sind.

## Claims

1. Optical element for deflecting electromagnetic waves, having a photonic structure formed at least in a subregion, the optical element (1) at least partially comprising an electro-optical and/or magneto-optical and/or piezoelectric material, and an outer contour of the optical element (1) and/or an outer contour of the photonic structure (2) being formed as an optical lens or as a prism.

2. Optical element according to Claim 1, **characterised in that** the optical element (1) consists entirely of a material having electro-optical and/or magneto-optical and/or piezoelectric properties.

3. Optical element according to Claim 1 or 2, **characterised in that** the photonic structure (1) is at least partially formed in the material of the optical element (1), which material has electro-optical and/or magneto-optical and/or piezoelectric properties.

4. Optical element according to at least one of Claims 1 to 3, **characterised in that** the photonic structure (2) is formed in the complete body volume of the optical element (1).

5. Optical element according to at least one of Claims 1 to 4, **characterised in that** the optical element (1) consists of LiNbO₃ and/or BaTiO₃ and/or LiTaO₃ or of a member of the garnet family.

6. Optical element according to at least one of Claims 1 to 5, **characterised in that** at least a refractive index of the optical element (1) and/or at least one dimension of the optical element (1) is variable.

7. Deflecting device for electromagnetic waves having an optical element according to at least one of Claims 1 to 6.

8. Deflecting device for electromagnetic waves according to Claim 7, **characterised by** a device for generating an electric or magnetic field (6), wherein an electric or magnetic field generated by means of the device for generating an electric or magnetic field (6) permeates the optical element (1) at least partially and preferably homogeneously.

9. Deflecting device for electromagnetic waves according to Claim 8, **characterised in that** the device for generating an electric or magnetic field (6) comprises a plurality of, in particular two electrodes (7).

10. Deflecting device for electromagnetic waves according to Claim 9, **characterised in that** the electrodes (7) are directly in contact with the optical element (1).

11. Deflecting device for electromagnetic waves according to Claim 9 or 10, **characterised in that** the electrodes (7) are arranged mutually parallel and perpendicularly to or in the propagation direction of the electromagnetic wave (L).

12. Deflecting device for electromagnetic waves according to at least one of Claims 9 to 11, **characterised in that** the electrodes (7) arranged perpendicularly to the propagation direction of the electromagnetic wave (L) comprise recesses (8) which serve as entry faces or exit faces for the electromagnetic wave (L) and are in particular strip-shaped.

13. Deflecting device for electromagnetic waves according to at least one of Claims 7 to 12, **characterised in that** the photonic structure (2) has a refractive index varying periodically along the propagation direction of the electromagnetic wave (L).

14. Deflecting device for electromagnetic waves according to at least one of Claims 7 to 13, **characterised by** a nonlinear refractive index of the photonic structure (2), the nonlinear refractive index of the photonic structure (2) being adapted to the wavelength of the electromagnetic wave (L).

15. Deflecting device for electromagnetic waves according to at least one of Claims 7 to 14, **characterised by** an anisotropic refractive index of the photonic structure (2), a plurality of isoenergetic dispersion surfaces being formed in the photonic structure (2).

16. Deflecting device for electromagnetic waves according to at least one of Claims 7 to 15, **characterised in that** the photonic structure (2) comprises essentially periodically arranged cavities (3) and/or an essentially periodically arranged structure having mutually adjacent columnar regions.

17. Deflecting device for electromagnetic waves according to Claim 16, **characterised in that** the cavities (3) and/or the columnar regions are arranged transversely, in particular perpendicularly to the propagation direction of the electromagnetic wave (L).

18. Deflecting device for electromagnetic waves according to Claim 16 or 17, **characterised in that** the cavities (3) are formed as channels, the channels being arranged essentially parallel to one another.

19. Deflecting device for electromagnetic waves according to at least one of Claims 16 to 18, **characterised in that** the cavities (3) are filled with a further medium present in a solid or a liquid or a gaseous phase or in a superimposed aggregate state of the solid, liquid or gaseous phase.

## Revendications

1. Élément optique pour la déviation d'ondes électromagnétiques avec une structure photonique formée au moins dans une zone partielle, sachant que l'élément optique (1) comporte au moins en partie un matériau électro-optique et/ou magnéto-optique et/ou piézoélectrique, et qu'un contour extérieur de l'élément optique (1) et/ou un contour extérieur de la structure photonique (2) sont configurés comme lentille optique ou comme prisme.

2. Élément optique selon la revendication 1, **caractérisé en ce que** l'élément optique (1) est composé complètement d'un matériau présentant des propriétés électro-optiques et/ou magnéto-optiques et/ou piézoélectriques.

3. Élément optique selon la revendication 1 ou 2, **caractérisé en ce que** la structure photonique (2) est formée au moins partiellement en le matériau présentant des propriétés électro-optiques et/ou magnéto-optiques et/ou piézoélectriques de l'élément optique (1).

4. Élément optique selon l'une au moins des revendications 1 à 3, **caractérisé en ce que** la structure photonique (2) est formée dans le volume complet du corps de l'élément optique (1).

5. Élément optique selon l'une au moins des revendications 1 à 4, **caractérisé en ce que** l'élément optique (1) est composé de LiNbO₃ et/ou de BaTiO₃ et/ou de LiTaO₃ ou d'un membre de la famille des grenats.

6. Élément optique selon l'une au moins des revendications 1 à 5, **caractérisé en ce qu'**au moins un indice de réfraction de l'élément optique (1) et/ou au moins une dimension de l'élément optique (1) peuvent être modifiés.

7. Dispositif de déviation pour des ondes électromagnétiques avec un élément optique selon l'une au moins des revendications 1 à 6.

8. Dispositif de déviation pour des ondes électromagnétiques selon la revendication 7, **caractérisé par** un dispositif pour la production d'un champ électrique ou magnétique (6), dans lequel un champ électrique ou magnétique produit au moyen du dispositif pour la production d'un champ électrique ou magnétique (6) traverse l'élément optique (1) au moins en partie et de préférence de façon homogène.

9. Dispositif de déviation pour des ondes électromagnétiques selon la revendication 8, **caractérisé en ce que** le dispositif pour la production d'un champ électrique ou magnétique (6) présente plusieurs électrodes (7), en particulier deux.

10. Dispositif de déviation pour des ondes électromagnétiques selon la revendication 9, **caractérisé en ce que** les électrodes (7) sont directement en contact avec l'élément optique (1).

11. Dispositif de déviation pour des ondes électromagnétiques selon la revendication 9 ou 10, **caractérisé en ce que** les électrodes (7) sont disposées parallèlement les unes aux autres et perpendiculairement à la direction de propagation de l'onde électromagnétique (L) ou dans celle-ci.

12. Dispositif de déviation pour des ondes électromagnétiques selon l'une au moins des revendications 9 à 11, **caractérisé en ce que** les électrodes (7) disposées perpendiculairement à la direction de propagation de l'onde électromagnétique (L) présentent des évidements (8) servant de surfaces d'entrée ou de surfaces de sortie pour l'onde électromagnétique (L), et en particulier en forme de raies.

13. Dispositif de déviation pour des ondes électromagnétiques selon l'une au moins des revendications 7 à 12, **caractérisé en ce que** la structure photonique (2) présente un indice de réfraction qui varie périodiquement le long de la direction de propagation de l'onde électromagnétique (L).

14. Dispositif de déviation pour des ondes électromagnétiques selon l'une au moins des revendications 7 à 13, **caractérisé par** un indice de réfraction non linéaire de la structure photonique (2), sachant que l'indice de réfraction non linéaire de la structure photonique (2) est adapté à la longueur d'onde de l'onde électromagnétique (L).

15. Dispositif de déviation pour des ondes électromagnétiques selon l'une au moins des revendications 7 à 14, **caractérisé par** un indice de réfraction anisotrope de la structure photonique (2), sachant qu'une pluralité de surfaces de dispersion isoénergétiques sont formées dans la structure photonique (2).

16. Dispositif de déviation pour des ondes électromagnétiques selon l'une au moins des revendications 7 à 15, **caractérisé en ce que** la structure photonique (2) présente des cavités (3) disposées sensiblement périodiquement et/ou une structure disposée sensiblement périodiquement avec des zones en forme de colonnes voisines l'une de l'autre.

17. Dispositif de déviation pour des ondes électromagnétiques selon la revendication 16, **caractérisé en ce que** les cavités (3) et/ou les zones en forme de colonnes sont disposées transversalement par rapport à la direction de propagation de l'onde électromagnétique (L), en particulier perpendiculairement.

18. Dispositif de déviation pour des ondes électromagnétiques selon la revendication 16 ou 17, **caractérisé en ce que** les cavités (3) sont configurées comme des canaux, sachant que les canaux sont disposés sensiblement parallèlement les uns aux autres.

19. Dispositif de déviation pour des ondes électromagnétiques selon l'une au moins des revendications 16 à 18, **caractérisé en ce que** les cavités (3) sont remplies d'un autre milieu se présentant dans une phase solide, liquide ou gazeuse ou dans un état physique superposé des phases solide, liquide ou gazeuse.
